# EUROPEAN PATENT APPLICATION

(11) **EP 3 893 185 A1**
(43) Date of publication of application: **13.10.2021**
(21) Application number: 21166512.0
(22) Date of filing: 01.04.2021
(51) Int. Cl.: G06Q 30/02, G06Q 20/38, G07F 17/24

(54) **PARKING LOT MANAGEMENT DEVICE AND METHOD TO PROVIDE DISCOUNT ON PARKING FEE IN CONNECTION WITH PROVIDING OF CULTURAL CONTENT**

(30) Priority: 07.04.2020 KR 20200042181
(71) Applicant: ParkingCloud Co., Ltd., Seoul Yeongdeungpo-gu 07276 (KR); Shin, Sang Yong, Seoul Gangseo-gu 07548 (KR)
(72) Inventor: SHIN, Sang Yong, 07548 Seoul (KR); HEO, Won Jin, 07276 Seoul (KR)
(74) Representative: Forresters IP LLP

(57) **Abstract**

The present disclosure relates to a parking lot management device that communicates with a provider device of a content provider that provides content for a predetermined time period and a mobile device of a content user. The parking lot management device includes one or more processors and one or more memories. One or more instructions stored in the one or more memories, when executed by the one or more processors, cause the one or more processors to perform operations including: a discount code providing operation of generating and storing a discount code and providing the generated discount code to the provider device in response to a request from the provider device of the content provider; and a discount providing operation of determining whether a discount code for the mobile device is valid in response to a discount request from the mobile device and applying a predetermined discount on a parking fee of a vehicle of the content user when the discount code is valid.

## Description

### TECHNICAL FIELD

The present disclosure relates to a parking lot management device, method and non-transitory computer readable storage medium to provide discount on a parking fee in connection with providing of content.

### BACKGROUND

Unless otherwise indicated herein, the materials described in this section are not prior art to the claims in this application and are not admitted as prior art by inclusion in this section.

Along with the generalization in the use of personal vehicles or shared vehicles and the advancement of facilities such as roads, the use of parking lots has increased. A lot of people who wants to enjoy showing or performance content such as movie, performance, play, concert, or the like park their vehicles in a parking lot associated with a location such as a movie theater, a venue, a theater, or the like. A content provider that provides such showing or performance content offers a discount on a parking fee to a content user in order to promote the use of content. In general, the content user receives a ticket at the showing or performance location before the content is provided and then registers the use of a parking lot to perform an additional process for getting a discount on a parking fee. As the number of users of showing or performance content increases, this additional process may cause a long time waiting, which may resultantly affect the use of content by the users.

In this regard, Korean Patent Publication No. 10-2013-0012039 discloses the configuration for automatically providing a discount on a parking fee using short-range wireless communication, such as NFC. However, to this end, a content provider needs to further install a short-range wireless communication device, which can be burdensome to the content provider.

### SUMMARY

In order to solve the above-described problems, the present disclosure provides a method, device and computer readable storage medium for efficiently providing a discount on a parking fee in connection with providing of showing or performance content.

In some embodiments of the present disclosure, a parking lot management device is described. As an example, a parking lot management device can communicate with a provider device of a content provider that provides content for a predetermined time period and a mobile device of a content user. The parking lot management device may include: one or more processors; and one or more memories. The one or more memories store one or more instructions executable by the one or more processors. When executed by the one or more processors, the one or more instructions enable the one or more processors to perform operations including: a discount code providing operation of, in response to a request from the provider device of the content provider, generating and storing a discount code for a discount on a parking fee and providing the generated discount code to the provider device; and a discount offering operation of, in response to a discount request including the discount code from the mobile device, determining whether a discount code for the mobile device is valid and, when the discount code is valid, applying a predetermined discount on a parking fee of a vehicle of the content user.

In some other embodiments, a parking lot management method is described. As an example, a parking lot management method may include: managing parking information of one or more vehicles that use a first parking lot; receiving, from a provider device, a provider request including product information relating to content, a parking lot identifier of the first parking lot and a validity term of a discount on a parking fee; generating a discount code using the product information and the validity term; transmitting the generated discount code to the provider device to enable a content provider to display the generated discount code in connection with providing the content; receiving a discount request including the discount code and user information from a mobile device that has captured the discount code; analyzing the received discount code to determine a parking lot identifier and a validity term of the discount code; analyzing the received user information to determine a vehicle number of a vehicle of a content user and the first parking lot where the vehicle is parked; applying a predetermined discount on a parking fee of the vehicle of the content user in the first parking lot when a parking lot corresponding to the parking lot identifier determined by analyzing the received discount code is matched with the first parking lot determined by analyzing the user information and receiving the discount request is within the determined validity term.

According to some embodiments, a non-transitory computer readable storage medium that stores a parking lot management program is described. As an example, a parking lot management program may include one or more instructions that, when executed by a computing device, cause the computing device to perform: managing parking information of one or more vehicles that use a first parking lot; receiving, from a provider device of a content provider that provides content for a predetermined time period, a provider request including product information relating to the content, a parking lot identifier of the first parking lot and a validity term of a discount on a parking fee; generating a discount code using the product information and the validity term; transmitting the generated discount code to the provider device to enable the content provider to display the generated discount code in connection with providing the content; receiving a discount request including the discount code and user information from a mobile device of a content user; analyzing the received discount code to determine a parking lot identifier and a validity term of the discount code; analyzing the received user information to determine a vehicle number of a vehicle of the content user and the first parking lot where the vehicle is parked; and applying a predetermined discount on a parking fee of the vehicle of the content user in the first parking lot when a parking lot corresponding to the parking lot identifier determined by analyzing the received discount code is matched with the first parking lot determined by analyzing the received user information and receiving the discount request is within the determined validity term.

The foregoing summary is illustrative only and is not intended to be in any way limiting. In addition to the illustrative embodiments and features described above, further embodiments and features will become apparent by reference to the drawings and the following detailed description.

### BRIEF DESCRIPTION OF THE DRAWINGS

The foregoing and other features of the present disclosure will be described in detail with reference to the accompanying drawings. Understanding that these drawings depict only several examples in accordance with the disclosure and are, therefore, not to be considered limiting of its scope, the disclosure will be described with additional specificity and detail through use of the accompanying drawings, in which:
**FIG. 1** is a diagram illustrating an example process of a parking lot management method for providing a discount on a parking fee, in accordance with at least some embodiments of the present disclosure;
**FIG. 2** is a diagram illustrating an example environment for providing a discount on a parking fee, in accordance with at least some embodiments of the present disclosure;
**FIG. 3** is a block diagram illustrating a parking lot management device 300, in accordance with at least some embodiments of the present disclosure; and
**FIG. 4** is a diagram illustrating a computer program product that can be used in providing a discount on a parking fee, in accordance with at least some embodiments of the present disclosure.

### DETAILED DESCRIPTION

Hereafter, embodiments and examples will be described in detail with reference to the accompanying drawings so that the present disclosure may be readily implemented by those skilled in the art. However, it is to be noted that the present disclosure is not limited to the embodiments and examples but can be embodied in various other ways.

The present disclosure relates to a method, device and computer readable storage medium for generally managing a parking lot and particularly providing a discount on a parking fee to a user of content that is being shown or performed.

In the present disclosure, the term "content" refers to cultural content, such as a movie, a play, a concert or the like, that is shown or performed at a predetermined location for a predetermined time period and is not limited to specific examples as long as it does not depart from the spirit and scope of the present disclosure. As another example of the content according to the present disclosure, a sports event can be considered as included in the concept of the content according to the present disclosure because it is performed at a predetermined location, such as a stadium for a predetermined time period. According to the present disclosure, a user may park his/her vehicle in a parking lot to use content, use the content at a predetermined location for a predetermined time period and get a discount on a parking fee for the use of the content.

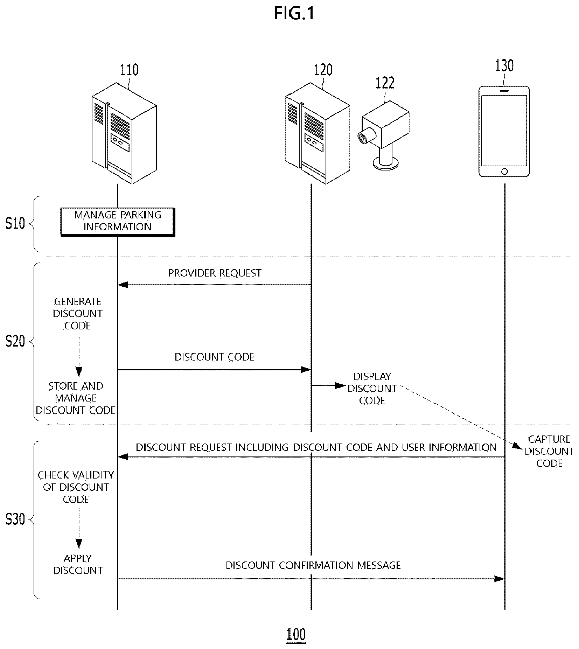

FIG. 1 is a diagram illustrating an example process of a parking lot management method for providing a discount on a parking fee, in accordance with at least some embodiments of the present disclosure. As shown in FIG. 1, a parking lot management method may include a parking information managing step S10 for a parking lot, a discount code providing step S20 and a discount offering step S30. It is to be noted that the process shown in Fig. 1 is just conceptually separated into steps S10 to S30, and the sequence of such steps S10-S30 does not limit their performing order. In this regard, parking information managing step S10 may be continuously performed while discount code providing step S20 and discount offering step S30 are performed. Meanwhile, conceptually, discount code providing step S20 may be performed after discount offering step S30.

The parking lot management method according to the present disclosure may be performed in an example system 100. System 100 includes a server 110, a provider device 120 of a content provider and a mobile device 130 of a content user. Server 110 may be a standalone server such as single computing device, a server farm including a plurality of servers, a distributed network, a cloud computing structure and any computing device having data transmission/reception functions, data identification functions and data processing functions. In some examples, server 110 may be connected to each of one or more provider devices 120 and one or more mobile devices 130 in a communicative manner through networks. The network between server 110 and provider device 120 may include, for example, a PAN (personal area network), a LAN (local area network), a WAN (wide area network), a cable network, a satellite network, a cellular network, a GSM (Global System for Mobile Communications) network, a CDMA (Code Division Multiple Access) network, an LTE (Long Term Evolution) network, an LTE-A (Long Term Evolution-Advanced) network, a WiMax (Interoperability for Microwave Access) network and a Wi-Fi (Wireless Fidelity) network, but may not be limited thereto. Further, the network between server 110 and mobile device 130 may include a satellite network, a cellular network, a GSM network, a CDMA network, an LTE network, an LTE-A network, a WiMax network and a Wi-Fi network and may be a wireless network which is not limited thereto.

At Step S10, server 110 may communicate with various devices including, without limitation, one or more local servers and/or vehicle counters, a license plate recognition (LPR) device, a monitoring camera device such as a four-sided camera, a surveillance camera device such as a closed circuit television (CCTV) camera, a parking recognizer in order to manage a parking lot, while communicating with provider device 120 or mobile device 130. As described above, server 110 may manage, for example, parking information of one or more vehicles that use a parking lot. The parking information may include, for example, parking lot information, time of entry, time of exit, a parking zone, a vehicle number, a fee rate and the like. As such, server 110 may manage parking information of one or more parking lots.

Provider device 120 may include a small-form factor portable (or mobile) electronic device such as a desktop computer, a laptop computer, a smartphone, a tablet computer, a mobile phone, a personal digital assistant (PDA), an application specific device, or a hybrid device having any of the above-described functions, but may not be limited thereto. A display device 122 includes various types of devices that can display a discount code. For example, display device 122 may include a projector, a signage, a display screen, or the like.

The content provider of provider device 120 may sell a product that provides a predetermined content, such as a movie, a play, a concert, or a sports event, at a predetermined location, such as a movie theater, a theater, or a sports stadium, and the content user of mobile device 130 may buy the product. The content user may want to park his/her vehicle in a first parking lot to use the content, and the content provider may want to offer a discount service on a parking fee in the first parking lot for the content user. The content provider may determine product information relating to content to be provided and discount information relating to a discount on a parking fee. The product information may include a product identifier of the content to be provided, provision time (or provision time period), or the like. The discount information may include a parking lot identifier of a parking lot for which a discount service will be offered and a validity term of the discount service. Additionally, the discount information may further include discount conditions such as a discount amount or discount rate.

At Step S20, the content provider may transmit, to server 110, a provider request including the product information and the discount information, using provider device 120. In some examples, provider device 120 may transmit at least a product identifier, a parking lot identifier and a validity term. In some additional examples, the provider request may further include an identifier of display device 122 on which a discount code will be displayed. As such, server 110 may receive the provider request from provider device 120. Server 110 may generate a discount code based on some of the product information and the discount information, for example, at least the product information and the validity term. In examples that the provider request further includes an identifier of display device 122, server 110 may generate a discount code further based on the identifier of display device 122. The discount code may be generated in the form of a visible code such as a QR (Quick Response) code or a bar code.

In some examples, server 110 may apply a hash function with the product information and the validity term as variables to calculate a hash value. Then, server 110 may apply a predetermined discount code transformation function based on the calculated hash value to generate a discount code. Server 110 may store the generated discount code in relation to the parking lot identifier and the validity term in a database. In examples that the provider request further includes the identifier of display device 122, server 110 may store the generated discount code in further relation to the identifier of display device 122. Since server 110 stores the generated discount code in relation to the parking lot identifier, it is possible to increase the efficiency of search based on the discount code.

Thereafter, server 110 may transmit the generated discount code to provider device 120. Provider device 120 may receive the discount code in response to the transmission of the provider request. The content provider may use display device 122 to display the received discount ode in connection with providing the content (for example, showing or performance). In examples that the provider request further includes the identifier of display device 122, the content provider may enable display device 122 corresponding to the identifier to display the generated discount code. For example, if display device 122 is a signage installed near a movie theater, the content provider may set the signage to display the discount code for a predetermined time period after showing of a movie. In some examples, display device 122 may be wired or wirelessly connected to provider device 120, and the content provider may instruct provider device 120 to display the discount code on display device 122. In some other examples, display device 122 may be a separate device that is not connected to provider device 120, and the content provider may store the discount code received by provider device 120 in a separate storage device and then using such storage device, operate display device 122 to display the discount code thereon. The discount code may be displayed at a location in relation to providing the content for a predetermined time period before, while, or after the content is provided. The above display of the discount code is just an example and can be modified as requested by the content provider.

At Step S30, the content user may use mobile device 130 to capture the discount code being displayed at the location in relation to providing the content. As such, mobile device 130 may be one of various types of mobile devices having a camera function capable of capturing a discount code and may include, for example, a laptop computer, a smartphone, a tablet computer, a mobile phone, a personal digital assistant (PDA), and the like, but may not be limited thereto. For example, mobile device 130 may also capture the discount code through a separate camera device wired or wirelessly connected to mobile device 130. Mobile device 130 may transmit a discount request including the captured discount code and user information to server 110.

In some examples, the content user may execute a parking service-related application on mobile device 130 and capture the discount code using the camera of mobile device 130. In some other examples, the content user may capture the discount code using the camera of mobile device 130, and by capturing the discount code, the application may be executed. In examples that the parking service-related application is executed, mobile device 130 may previously store user information such as an identifier ID of the content user, vehicle information of the content user and the like, and by capturing the discount code, the user information and the discount code may be transmitted to server 110. In some other examples, the content user may capture the discount code using the camera of mobile device 130, and accordingly, access a parking service-related website. In such examples, mobile device 130 of the content user may transmit user information, such as vehicle information, together with the discount code through the website. In some examples, when the discount code is captured, mobile device 130 may decode the discount code to obtain a hash value and transmit the hash value, as a discount code, to server 110. Optionally, the user information may further include location information such as GPS coordinate information of mobile device 130.

Server 110 may receive the discount request including the discount code and the user information from mobile device 130 and determine the validity of the discount code. Server 110 may determine that the received discount code is stored in the database and read the parking lot identifier and the validity term of the discount code based on the received discount code from the database. Also, server 110 may determine a vehicle number of a vehicle of the content user and a parking lot where the vehicle is parked based on the received user information. In some examples, server 110 may read the vehicle number of the content user and the parking lot where the vehicle is parked based on the user information and the parking information being managed. When server 110 reads the parking lot where the vehicle of the content user is parked, server 110 may also read other parking-related information such as time of entry or the like.

Server 110 may determine whether a parking lot in relation to the discount code is matched with the parking lot where the vehicle of the user is parked and may determine whether the discount code is valid. If the parking lot in relation to the discount code is matched with the parking lot where the vehicle of the user is parked and the discount code is received within the validity term, server 110 may generate a discount confirmation message. Otherwise, server 110 may generate a discount failure message. For example, if the parking lot in relation to the discount code is a first parking lot and the content user parks his/her vehicle in a second parking lot, server 110 may generate a discount failure message. Also, if the discount code is received beyond the validity term, server 110 may generate a discount failure message. Additionally or optionally, if the user information further includes location information of mobile device 130, server 110 may further determine whether the discount code transmitted by mobile device 130 is transmitted from a location in relation to providing the content based on the location information to determine whether the discount code is valid. Additionally or optionally, server 110 may further determine whether the discount code is used more than once using the identifier ID of the content user to determine whether the discount code is valid.

Then, if the discount code is valid, server 110 may apply a predetermined discount on a parking fee of the vehicle of the content user in the parking lot and transmit a discount confirmation message to mobile device 130. If a discount failure message is generated, server 110 may transmit the discount failure message to mobile device 130.

As described above, according to the present disclosure, the content user does not need to get a discount on a parking fee through a ticket office or a kiosk at a location in relation to providing of content, for example, a movie theater or a venue, but can get a discount on a parking fee by capturing a discount code with a mobile device while or after the content is provided. Therefore, it is possible to reduce congestion at the location in relation to providing the content and also possible to improve the convenience of the content user. Also, when the identifier of the display device is used in generating the discount code, the server may acquire statistical information indicating which device is used to make a discount request of the content user, and, thus, it is possible to further improve the convenience of the content provider and the content user using the acquired statistical information.

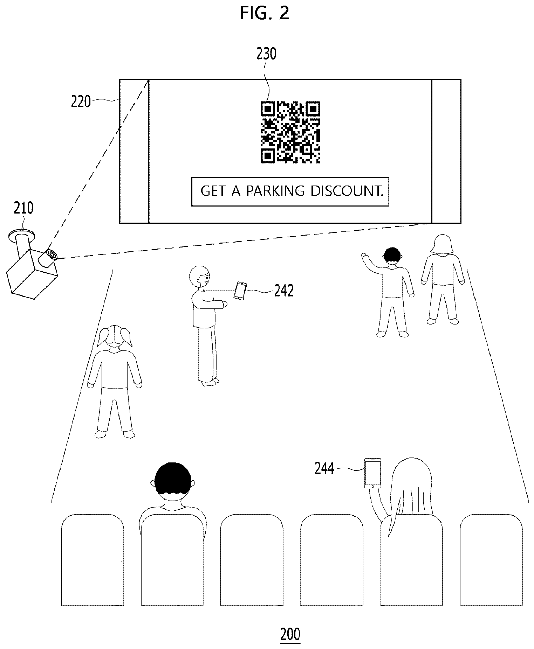

**FIG. 2** is a diagram illustrating an example environment 200 for providing a discount on a parking fee, in accordance with at least some embodiments of the present disclosure. The example environment 200 may be a movie theater. After a movie showing in the movie theater is ended, a display device 210 such as a projector may display, i.e., project a parking discount code 230 on a screen 220, and users may use their own mobile devices 242 and 244 to capture projected discount code 230. In an example, the user may use mobile device 244 to execute a parking service-related application and capture discount code 230. Then, mobile device 244 may transmit a discount request including, for example, a user ID related to the parking service, vehicle information of the user, the discount code or a hash value obtained by decoding the discount code, to a computing device, such as server 110 illustrated in FIG. 1, according to the present disclosure, and the computing device may apply a discount on a parking fee of the user in response to the discount request according to the present disclosure. The example shown in FIG. 2 is just for explanation and embodiments of the present disclosure are not limited thereto.

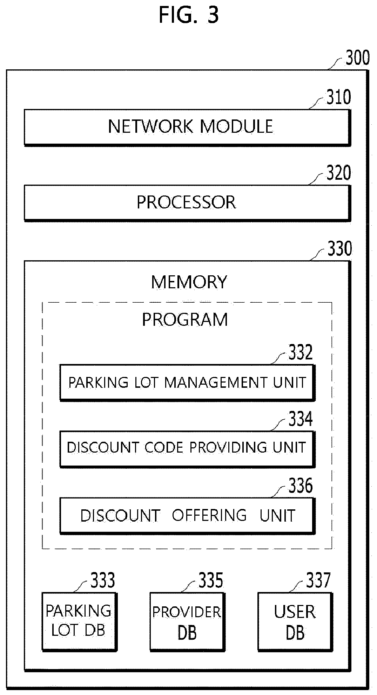

**FIG. 3** is a block diagram illustrating a parking lot management device 300, in accordance with at least some embodiments of the present disclosure. Parking lot management device 300 shown in FIG. 3 may manage parking information of one or more parking lots like, for example, server 110 shown in FIG. 1. Therefore, parking lot management device 300 may be a standalone server such as single computing device, a server farm including a plurality of servers, a distributed network, a cloud computing structure and any computing device having data transmission/reception functions, data identification functions and data processing functions.

In some embodiments, parking lot management device 300 may include a network module 310, a processor 320 and a memory 330.

Network module 310 may communicate with various devices, such as one or more local servers and/or vehicle counters, an LPR device, a monitoring camera device, a surveillance camera device and a parking recognizer, in relation to a parking lot in order to manage the parking lot. Also, network module 310 may communicate with a provider device of a content provider and a mobile device of a content user.

Processor 320 may include one or more processor units, and memory 330 may include one or more memory units. Memory 330 may store at least one or more program including one or more instructions. When the at least one or more program stored in memory 330 is executed by processor 320, operations of a parking lot management unit 332, a discount code providing unit 334 and a discount offering unit 336 may be performed. These components 332, 334 and 336 are illustrated as individual components, but may be separated into additional components, combined into fewer components or eliminated altogether without departing from the scope of the present disclosure. Also, FIG. 3 illustrates that the components are implemented by software, but it will be understood by those skilled in the art that the function and/or operation of each component can be implemented, individually and/or collectively, by hardware, software, firmware, or any combination thereof. Memory 330 may further store a parking lot database (DB) 333, a provider DB 335 and a user DB 337. The DBs 333, 335 and 337 are illustrated as individual DBs, but may be separated into additional DBs or combined into fewer DBs, or some may be eliminated without departing from the scope of the present disclosure.

In some examples, parking lot management device 300 may perform, by processor 320, an operation of parking lot management unit 332 and record data related to parking lot management unit 332 in parking lot DB 333 or read the data from parking lot DB 333. Parking lot DB 333 may store parking information and include, for example, parking lot information, time of entry, time of exit, a parking zone, a vehicle number, a fee rate and the like.

In some examples, parking lot management device 300 may perform, by processor 320, an operation of discount code providing unit 334 and record data related to discount code providing unit 334 in provider DB 335 or read the data from provider DB 335. Parking lot management unit 332 may cause network module 310 to receive a provider request transmitted by the provider device, and the provider request includes product information relating to content and discount information. The product information may include such as a product identifier, provision time (or provision time period), or the like. The discount information may include a parking lot identifier of a parking lot for which a discount service will be offered and a validity term of the discount service, i.e., a discount code to be requested, which will be described below. In an additional example, the discount information may further include discount conditions such as a discount amount or discount rate.

Discount code providing unit 334 may generate a discount code by operation of processor 320. Discount code providing unit 334 may generate a discount code based on some of the product information and the discount information, for example, at least the product information and the validity term. The discount code may be generated in the form of a visible code such as a QR (Quick Response) code or a bar code. In some examples, discount code providing unit 334 may apply a hash function with the product information and the validity term as variables to cause processor 320 to calculate a hash value. Then, discount code providing unit 334 may apply a predetermined discount code transformation function, such as a QR code generation algorithm, based on the calculated hash value to cause processor 320 to generate a discount. Discount code providing unit 334 store the generated discount code in relation to the parking lot identifier and the validity term in provider DB 335. Since the generated discount code is stored in relation to the parking lot identifier, it is possible to increase the efficiency of search based on the discount code, which will be described below. Thereafter, discount code providing unit 334 may cause network module 310 to transmit the generated discount code to the provider device, and the content provider of the provider device may display the discount code in connection with providing the content.

Discount offering unit 336 may offer a discount in response to a discount request from the mobile device of the content user by operation of processor 320. The content user may use his/her own mobile device to capture a discount code being displayed at a location in relation to providing the content and transmit a discount request including the captured discount code and user information to parking lot management device 300. Discount offering unit 336 may cause network module 310 to receive the discount request from the mobile device of the content user. The user information may include an identifier ID of the content user, vehicle information of the content user and the like. In an additional example, the user information may further include location information of mobile device of the content user.

Discount offering unit 336 may cause processor 320 to determine the validity of the discount code. In some examples, discount offering unit 336 may read a parking lot identifier and a validity term of the discount code from provider DB 335 based on the discount code included in the received discount request. In some examples, discount offering unit 336 may read additional user information from user DB 337 based on the received user information included in the received discount request. For example, additional user information read from user DB 337 may include a vehicle number of the content user (if it is not included in the discount request). In some examples, discount offering unit 336 may read, from parking lot DB 333, a vehicle number of a vehicle of the content user and a parking lot where the vehicle is parked based on the user information. Additionally, discount offering unit 336 may also read other parking-related information such as time of entry of the vehicle of the content user.

Discount offering unit 336 may determine whether a parking lot in relation to the discount code is matched with the parking lot where the vehicle of the user is parked and may determine whether the discount code is received within the validity term. If the parking lot in relation to the discount code is matched with the parking lot where the vehicle of the user is parked and the discount code is received within the validity term, discount offering unit 336 may cause processor 320 to generate a discount confirmation message. Otherwise, discount offering unit 336 may cause processor 320 to generate a discount failure message. Additionally or optionally, if the received user information further includes location information of the mobile device, discount offering unit 336 may further determine whether the discount code transmitted by mobile device is transmitted from a location in relation to providing the content based on the location information, to determine whether the discount code is valid. Additionally or optionally, discount offering unit 336 may further determine whether the discount code is used more than once using the identifier ID of the content user to determine whether the discount code is valid.

If the discount code is valid, discount offering unit 336 may cause processor 320 to apply a predetermined discount on a parking fee of the vehicle of the content user in the parking lot and cause network module 310 to transmit a discount confirmation message to mobile device. If a discount failure message is generated, discount offering unit 336 may cause network module 310 to transmit the discount failure message to mobile device.

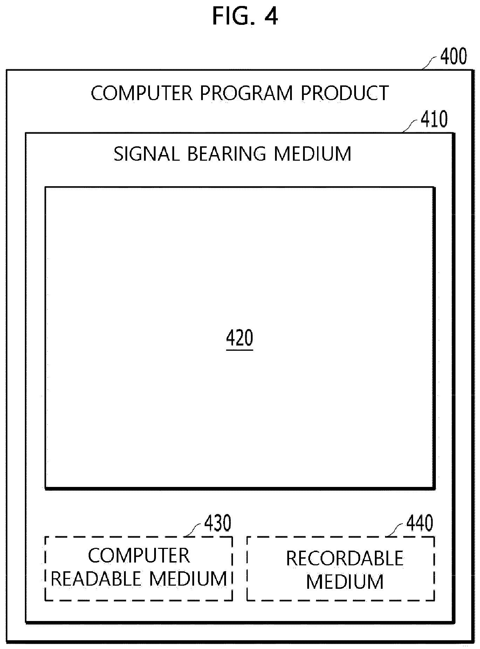

FIG. 4 is a diagram illustrating an example computer program product 400 that can be used in providing a discount on a parking fee, in accordance with at least some embodiments of the present disclosure. An illustrative embodiment of example computer program product 400 is provided using a signal bearing medium 410. In some embodiments, signal bearing medium 410 of one or more computer program products 400 may include a computer readable medium 430 and/or a recordable medium 440.

Instructions 420 included in signal bearing medium 410 may be executed by a computing device such as server 110 and parking lot management device 300. For example, instructions 420 may include at least one of: one or more instructions for managing parking information of one or more vehicles that use a first parking lot; one or more instructions for receiving, from a provider device, a provider request including product information relating to content, a parking lot identifier of the first parking lot and a validity term of a discount on a parking fee; one or more instructions for generating a discount code using the product information and the validity term; one or more instructions for transmitting the generated discount code to the provider device to enable a content provider to display the generated discount code in connection with providing the content; one or more instructions for receiving a discount request including the discount code and user information from a mobile device that captures the discount code; one or more instructions for analyzing the received discount code to determine a parking lot identifier and a validity term of the discount code; one or more instructions for analyzing the received user information to determine a vehicle number of a vehicle of the content user and the first parking lot where the vehicle is parked; one or more instructions for applying a predetermined discount on a parking fee of the vehicle of the content user in the first parking lot when the determined the parking lot is matched and the discount code is received within the determined validity term.

The above description of the present disclosure is provided for the purpose of illustration, and it would be understood by a person with ordinary skill in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The claimed subject matter is not limited in scope to the particular implementations described herein. For example, some implementations may be in hardware, such as employed to operate on a device or combination of devices, for example, whereas other implementations may be in software and/or firmware. Likewise, although claimed subject matter is not limited in scope in this respect, some implementations may include one or more articles, such as a signal bearing medium, a storage medium and/or storage media. This storage media, such as CD-ROMs, computer disks, flash memory, or the like, for example, may have instructions stored thereon, that, when executed by a computing device, such as a computing system, computing platform, or other system, for example, may result in execution of a processor in accordance with the claimed subject matter, such as one of the implementations previously described, for example. As one possibility, a computing device may include one or more processing units or processors, one or more input/output devices, such as a display, a keyboard and/or a mouse, and one or more memories, such as static random access memory, dynamic random access memory, flash memory, and/or a hard drive.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as a program product in a variety of forms, and that an illustrative example of the subject matter described herein applies regardless of the particular type of signal bearing medium used to actually carry out the distribution.

While certain example techniques have been described and shown herein using various methods and systems, it should be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter also may include all implementations falling within the scope of the appended claims, and equivalents thereof.

The scope of the present disclosure is defined by the following claims rather than by the detailed description. It shall be understood that all modifications and variations from the meaning and scope of the claims and their equivalents are included in the scope of the present disclosure.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A parking lot management device that communicates with a provider device of a content provider that provides content for a predetermined time period and a mobile device of a content user, comprising:
one or more processors; and
one or more memories that store one or more instructions executable by the one or more processors,
wherein when executed by the one or more processors, the one or more instructions cause the one or more processors to perform operations including:
a discount code providing operation of, in response to a request from the provider device of the content provider, generating and storing a discount code for a discount on a parking fee and providing the generated discount code to the provider device; and
a discount offering operation of, in response to a discount request including the discount code from the mobile device, determining whether a discount code for the mobile device is valid and, when the discount code is valid, applying a predetermined discount on a parking fee of a vehicle of the content user when the discount code is valid.

2. The parking lot management device of Claim 1,
wherein the discount code providing operation includes:
receiving, from the provider device, a provider request including product information relating to the content, a parking lot identifier and a validity term of a discount on a parking fee;
generating the discount code using the product information and the validity term; and
transmitting the generated discount code to the provider device to enable the content provider to display the generated discount code in connection with providing the content.

3. The parking lot management device of Claim 2,
wherein the provider request further includes an identifier of a display device, wherein the discount code is to be displayed on the display device, and
generating the discount code includes generating the discount code further based on the identifier of the display device.

4. The parking lot management device of Claim 2 or 3,
wherein generating the discount code includes:
applying a hash function with the product information and the validity term as variables to calculate a hash value; and
based on the hash value, applying a predetermined discount code transformation function to generate the discount code.

5. The parking lot management device of any preceding Claim,
when the discount offering operation includes:
receiving the discount request including the discount code and user information from the mobile device that has captured the discount code;
analyzing the received discount code to determine a parking lot identifier and a validity term of the discount code;
analyzing the received user information to determine a vehicle number of the vehicle of the content user and a parking lot where the vehicle is parked; and
applying a predetermined discount on a parking fee of the vehicle of the content user in the parking lot when a parking lot corresponding to the parking lot identifier determined by analyzing the received discount code is matched with the parking lot determined by analyzing the received user information and receiving the discount request is within the determined validity term.

6. The parking lot management device of any preceding Claim,
wherein the discount code is a QR (Quick Response) code or a bar code, and
the discount request is transmitted from the mobile device capturing the discount code.

7. The parking lot management device of any preceding Claim,
wherein the one or more memories store user information including at least one of an identifier (ID) of the content user, a vehicle model of a vehicle of the content user and a vehicle number of the vehicle and parking lot management information including entry and/or exit information of the vehicle that uses a parking lot.

8. A parking lot management method performed in a computing device that communicates with a provider device of a content provider that provides content for a predetermined time period and a mobile device of a content user, comprising:
managing parking information of one or more vehicles that use a first parking lot;
receiving, from the provider device, a provider request including product information relating to the content, a parking lot identifier of the first parking lot and a validity term of a discount on a parking fee;
generating a discount code using the product information and the validity term;
transmitting the generated discount code to the provider device to enable the content provider to display the generated discount code in connection with providing the content;
receiving a discount request including the discount code and user information from the mobile device that has captured the discount code;
analyzing the received discount code to determine a parking lot identifier and a validity term of the discount code;
analyzing the received user information to determine a vehicle number of a vehicle of the content user and the first parking lot where the vehicle is parked; and
applying a predetermined discount on a parking fee of the vehicle of the content user in the first parking lot when a parking lot corresponding to the parking lot identifier determined by analyzing the received discount code is matched with the first parking lot determined by analyzing the user information and receiving the discount request is within the determined validity term.

9. A non-transitory computer readable storage medium that includes one or more instructions that, when executed by a computing device, cause the computing device to perform:
managing parking information of one or more vehicles that use a first parking lot;
receiving, from a provider device of a content provider that provides content for a predetermined time period, a provider request including product information relating to the content, a parking lot identifier of the first parking lot and a validity term of a discount on a parking fee;
generating a discount code using the product information and the validity term;
transmitting the generated discount code to the provider device to enable the content provider to display the generated discount code in connection with providing the content;
receiving a discount request including the discount code and user information from a mobile device of a content user;
analyzing the received discount code to determine a parking lot identifier and a validity term of the discount code;
analyzing the received user information to determine a vehicle number of a vehicle of the content user and the first parking lot where the vehicle is parked; and
applying a predetermined discount on a parking fee of the vehicle of the content user in the first parking lot when a parking lot corresponding to the parking lot identifier determined by analyzing the received discount code is matched with the first parking lot determined by analyzing the received user information and receiving the discount request is within the determined validity term.
